# EUROPEAN PATENT APPLICATION

(11) **EP 4 654 334 A1**
(43) Date of publication of application: **26.11.2025**
(21) Application number: 25178438.5
(22) Date of filing: 23.05.2025
(51) Int. Cl.: H01M 10/613, H01M 50/249

(54) **ENERGY-STORAGE APPARATUS AND ENERGY-STORAGE SYSTEM**

(30) Priority: 23.05.2024 CN 202410641949
(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: CHEN, Xianxi, Shenzhen, 518110 (CN); LIU, Junjun, Shenzhen, 518110 (CN)
(74) Representative: Santarelli

(57) **Abstract**

An energy-storage apparatus and an energy-storage system are disclosed in the disclosure. The energy-storage apparatus includes a box body and a battery module. The box body has a length direction and defines an installation space. The battery module includes a liquid-cooling structure and multiple battery cells positioned in the installation space. The liquid-cooling structure is connected to the box body and has a first side surface and a second side surface that are positioned facing towards each other in the length direction, at least one of the multiple battery cells is disposed on the first side surface, and at least another of the multiple battery cells is disposed on the second side surface.

## Description

### TECHNICAL FIELD

This disclosure relates to the field of energy-storage technology, and in particular, to an energy-storage apparatus and an energy-storage system.

### BACKGROUND

An energy-storage prefabricated cabin in the related art mainly involves assembling battery units into modules, integrating the modules into battery packs, and then integrating the battery packs into battery clusters. In intermediate processes, a large number of structural members are required. For example, structural members such as limiting assemblies and harness devices are used for fixing between the battery packs and between the battery clusters. These structural members are complex and occupy a large part of space, resulting in a low utilization rate of an installation space in the energy-storage prefabricated cabin and reducing the number of batteries, so that the energy density of the energy-storage prefabricated cabin is low, and the power storage capacity is small.

### SUMMARY

An energy-storage apparatus and an energy-storage system are disclosed in embodiments of the disclosure, which can improve the utilization rate of an installation space in the energy-storage apparatus and increase the number of battery cells, so that the energy density of the energy-storage apparatus can be improved and more power can be stored.

To achieve the above objective, in a first aspect, an energy-storage apparatus is disclosed in the disclosure. The energy-storage apparatus includes a box body and a battery module. The box body has a length direction and defines an installation space. The battery module includes a liquid-cooling structure and multiple battery cells positioned in the installation space. The liquid-cooling structure is connected to the box body and has a first side surface and a second side surface that are positioned facing towards each other in the length direction, at least one of the multiple battery cells is disposed on the first side surface, and at least another of the multiple battery cells is disposed on the second side surface.

In the energy-storage apparatus provided in the disclosure, battery clusters are directly formed by directly installing the battery cells on the liquid-cooling structure, so that the integration of modules and battery packs in intermediate processes is omitted, the integration level of the energy-storage apparatus is improved, structural members such as module frames, battery pack housings, battery frames, limiting assemblies, and harness devices are eliminated, and the number of structural members is greatly reduced. For one thing, the utilization rate of the installation space in the energy-storage apparatus can be improved, and the number of battery cells can be increased, thereby improving the energy density of the energy-storage apparatus, storing more power, and achieving a longer service life. For another thing, it is conducive to reducing the production cost of the energy-storage apparatus and reducing assembly processes, which facilitates acceleration of the production speed of the energy-storage apparatus.

In addition, since the multiple battery cells are directly arranged on the liquid-cooling structure, the liquid-cooling structure can achieve two purposes. That is, first, the module frames, battery frames, and the like can be eliminated by assembling the multiple battery cells in the box body through the liquid-cooling structure, so that the utilization rate of the installation space in the energy-storage apparatus can be improved, the number of battery cells can be increased, and thus the energy density of the energy-storage apparatus can be improved. Second, heat generated from the battery cells can be carried away through surfaces where the liquid-cooling structure is in contact with the battery cells, so that the temperature of the battery cells can be reduced, the continuous operation of the battery cells in a high-temperature environment can be avoided, and the use safety of the energy-storage apparatus can be improved.

As an optional embodiment, in an embodiment according to the first aspect of the disclosure, the box body further has a height direction and a width direction. The at least one of the multiple battery cells disposed on the first side surface includes multiple first sub-cells, and the multiple first sub-cells are stacked in a matrix in the height direction and the width direction. The at least another of the multiple battery cells disposed on the second side surface includes multiple second sub-cells, and the multiple second sub-cells are stacked in a matrix in the height direction and the width direction.

With the above design, the energy-storage apparatus can include more battery cells, thereby ensuring that the energy-storage apparatus can store more power. In addition, since no bearing plate exists between two of the battery cells adjacent in the height direction, the multiple battery cells are stacked in the height direction to ensure that the energy-storage apparatus achieves a real battery-frame-free design while including more battery cells. As such, the utilization rate of the installation space in the energy-storage apparatus can be further improved, and the number of battery cells can be further increased, thereby improving the energy density of the energy-storage apparatus, storing more power, and achieving a longer service life.

As an optional embodiment, in an embodiment according to the first aspect of the disclosure, the multiple first sub-cells are connected to the first side surface through heat-conducting adhesive, and the multiple second sub-cells are connected to the second side surface through the heat-conducting adhesive.

Since a cooling plate is placed between the first sub-cells and the second sub-cells, and two side surfaces (i.e., the first side surface and the second side surface) of the liquid-cooling structure are respectively adhered to the first sub-cells and second sub-cells through the heat-conducting adhesive, the first sub-cells and the second sub-cells can be tightly installed against the liquid-cooling structure, which increases the heat-dissipation area and thus improves the heat-dissipation effect. In addition to improving the heat-dissipation effect by virtue of the good heat conductivity of the heat-conducting adhesive, the first sub-cells and the second sub-cells each can be adhered and connected to the liquid-cooling structure by virtue of the good adhesive performance of the heat-conducting adhesive. As such, the overall rigidity of the battery module is improved, and thus the safety of the energy-storage apparatus during transportation and vibration is improved. Furthermore, there is no need to additionally arrange a limiting member or fastening member to fix the battery cells to the liquid-cooling structure, so that the utilization rate of the installation space in the energy-storage apparatus can be further improved, the number of battery cells can be further increased, and thus the energy density of the energy-storage apparatus can be further improved.

As an optional embodiment, in an embodiment according to the first aspect of the disclosure, the liquid-cooling structure includes a first liquid-cooling plate and a second liquid-cooling plate. The first liquid-cooling plate is connected to the box body and positioned at a bottom of the installation space. The second liquid-cooling plate and the first liquid-cooling plate are connected at an angle, and the second liquid-cooling plate has the first side surface and the second side surface. The first liquid-cooling plate includes a first part positioned on the first side surface and a second part positioned on the second side surface. The at least one of the multiple battery cells disposed on the first side surface is supported on the first part, and the at least another of the multiple battery cells disposed on the second side surface is supported on the second part.

The liquid-cooling structure is designed to include the first liquid-cooling plate and the second liquid-cooling plate which are disposed at an angle, so that the battery cells are fixed on the side surfaces of the second liquid-cooling plate, and the battery cells are supported on the first liquid-cooling plate. For one thing, the battery cells can be cooled by the first liquid-cooling plate and the second liquid-cooling plate. For another thing, the battery cells can be supported by the first liquid-cooling plate. As such, the battery cells will not be suspended to improve the stability of the battery cells on the liquid-cooling structure, which is conducive to improving the safety of the battery cells during transportation and vibration. In addition, the battery cells will not be in direct contact with the box body, so that the reverse conduction of the temperature outside the box body to the battery cells through the box body can be reduced or avoided, and thus the liquid-cooling effect is improved.

As an optional embodiment, in an embodiment according to the first aspect of the disclosure, the box body defines a connecting hole at an inner bottom surface of the box body, the first liquid-cooling plate defines a through-hole, and the through-hole is configured for a fastening member to pass through to make the fastening member threadedly connected to the connecting hole. The battery module is fixedly installed through the fastening member such as a bolt or a screw, which has a simple installation method and facilitates assembling of the energy-storage apparatus. In addition, compared with the snap-fit connection, the threaded connection can make the connection between the first liquid-cooling plate and the box body more reliable and stable, which is conducive to improving the installation stability of the battery module in the box body and thus improving the safety of the energy-storage apparatus during transportation and vibration.

As an optional embodiment, in an embodiment according to the first aspect of the disclosure, the box body includes a frame and multiple cover plates. The frame includes multiple longitudinal beams and multiple cross beams. The multiple longitudinal beams are spaced apart from each other in a circumferential direction of the box body. Two cross beams that are spaced apart from each other are connected between any two adjacent longitudinal beams. Each of the multiple cover plates is connected between two adjacent longitudinal beams and is connected between two adjacent cross beams to cooperatively define the installation space. A cross beam positioned at a bottom of the box body in a height direction of the box body is a bottom cross beam. A cover plate connected between two adjacent bottom cross beams is a bottom plate. The first liquid-cooling plate is connected to a top surface of the bottom cross beam, and in the height direction, the top surface of the bottom cross beam is higher than a top surface of the bottom plate to define a first gap between the first liquid-cooling plate and the top surface of the bottom plate.

Such a design can make the first liquid-cooling plate in contact with only the bottom cross beam and in no contact with the bottom plate, so that the first liquid-cooling plate is in contact with an external environment through only the bottom cross beam, thereby avoiding the contact between the first liquid-cooling plate and the external environment through the bottom plate. As such, the contact between the liquid-cooling structure and the external environment can be reduced, so that the reverse conduction of the external heat to the liquid-cooling structure or even to the battery cells through the box body can be reduced, and thus the liquid-cooling effect is improved.

As an optional embodiment, in an embodiment according to the first aspect of the disclosure, the bottom plate includes a first plate body and a second plate body. The first plate body and the second plate body are spaced apart from each other in the height direction, and the first plate body is closer to the top surface of the bottom cross beam than the second plate body. In the height direction, a top surface of the first plate body is lower than the top surface of the bottom cross beam, and a bottom surface of the second plate body is higher than a bottom surface of the bottom cross beam.

As such, when the energy-storage apparatus in the disclosure is placed on a placement plane such as a bearing surface for holding the energy-storage apparatus or a transportation device, the bottom cross beam is in contact with the placement plane, while the second plate body may not be in contact with the placement plane. In addition, since the second plate body is spaced apart from the first plate body, and the first plate body is spaced apart from the first liquid-cooling plate, the effect of multiple avoidance of contact between the first liquid-cooling plate and the external environment through the bottom plate can be achieved. In this way, the contact between the liquid-cooling structure and the external environment can be greatly reduced, so that the reverse conduction of the external heat to the liquid-cooling structure or even to the battery cells through the box body can be further reduced, and thus the liquid-cooling effect is further improved.

As an optional embodiment, in an embodiment according to the first aspect of the disclosure, the first plate body includes two separate first sub-plate bodies. The two first sub-plate bodies are spaced apart from each other in a width direction of the box body to define a second gap. The second plate body includes two separate second sub-plate bodies. The two second sub-plate bodies are arranged in the width direction of the box body and are respectively extended with connecting plates in the height direction. Two connecting plates are connected to each other, and each of the two connecting plates is spaced apart from one of the two first sub-plate bodies to define a third gap.

With the above design, the first gap is in communication with gaps between the second sub-plate bodies and the first sub-plate bodies through the second gap and the third gap. In this case, a hot air flow on a surface of the first liquid-cooling plate positioned in the first gap may be conducted sequentially through the second gap and the third gap to the gaps between the first sub-plate bodies and the second sub-plate bodies to avoid being trapped in the first gap, which is conducive to improving the liquid-cooling effect of the first liquid-cooling plate. In addition, with the arrangement of the connecting plate, the connection stability between the two second sub-plate bodies can be improved.

As an optional embodiment, in an embodiment according to the first aspect of the disclosure, the box body includes a frame and multiple cover plates. The frame includes multiple longitudinal beams and multiple cross beams. The multiple longitudinal beams are spaced apart from each other in a circumferential direction of the box body. Two cross beams that are spaced apart from each other are connected between any two adjacent longitudinal beams. Each of the multiple cover plates is connected between two adjacent longitudinal beams and is connected between two adjacent cross beams to cooperatively define the installation space. Compared with the box body with a structure of a main box body and a bottom plate or with a structure of a main box body and a top plate, since the box body in the disclosure is generally large, the main box body is also generally large, which makes it difficult to process an integrated main box body and results in a large processing difficulty of the box body. In this case, the multiple longitudinal beams, the multiple cross beams, and the multiple cover plates are spliced into the box body. Since the longitudinal beams, cross beams, and cover plates are processed more easily than the integrated main box body, the box body in the disclosure uses a structure of the frame and the multiple cover plates, which can reduce the processing difficulty of the box body and facilitate processing of the box body.

As an optional embodiment, in an embodiment according to the first aspect of the disclosure, a cross beam positioned at a bottom of the box body in a height direction of the box body is a bottom cross beam. A cover plate connected between two adjacent bottom cross beams is a bottom plate. The bottom plate includes multiple bottom plate bodies. The multiple bottom plate bodies are spaced apart from each other in the length direction. The frame further includes a bottom reinforcing beam. The bottom reinforcing beam is connected between two adjacent bottom plate bodies and is connected between the two opposite bottom cross beams.

In the disclosure, with the arrangement of the bottom reinforcing beam, the structural strength of the frame can be reinforced, the battery module can be better protected, and the safety of the energy-storage apparatus during transportation and vibration can be improved. In addition, since the bottom plate in the disclosure includes the multiple bottom plate bodies, and the bottom reinforcing beam is connected between the two adjacent bottom plate bodies, the bottom plate bodies are processed more easily than an entire plate with a relatively large area, and the bottom reinforcing beam connected between the two adjacent bottom plate bodies can be in contact with the placement plane. In this way, compared with a method in which the bottom reinforcing beam is supported on a top surface of the bottom plate, the entire gravitational force of the bottom reinforcing beam will not be all applied to the bottom plate, and instead, a supporting function can be achieved to a certain extent, which is conducive to improving the overall rigidity of the box body and thus improving the safety of the energy-storage apparatus during transportation and vibration.

As an optional embodiment, in an embodiment according to the first aspect of the disclosure, the bottom reinforcing beam includes two separate reinforcing sub-beams. The two reinforcing sub-beams are spaced apart from each other in a width direction of the box body. The box body further includes a support plate. The support plate is respectively connected to bottom surfaces of the two reinforcing sub-beams, and a bottom surface of the support plate is flush with a bottom surface of the bottom cross beam. Since a length of a regular and ordinary reinforcing beam in the width direction of the box body is generally relatively small, for example, smaller than 2 meters, the two reinforcing sub-beams are used and spliced into the bottom reinforcing beam through the support plate to satisfy requirements for the length of the bottom reinforcing beam, without a need for customizing a relatively long bottom reinforcing beam. As such, the processing of the bottom reinforcing beam is facilitated, and the cost of the bottom reinforcing beam is reduced. In addition, since the support plate is respectively connected to the bottom surfaces of the two reinforcing sub-beams, and the bottom surface of the support plate is flush with the bottom surface of the bottom cross beam, the bearing capacity at a joint between the two reinforcing sub-beams can be increased with the help of the support plate, to ensure the overall strength of the bottom reinforcing beam. That is, the above design can facilitate the processing while ensuring the overall strength.

As an optional embodiment, in an embodiment according to the first aspect of the disclosure, a cover plate positioned at a bottom of the box body in a height direction of the box body is a bottom plate. A cover plate positioned at a top of the box body in the height direction of the box body is a top plate. The frame further includes multiple longitudinal reinforcing beams that are spaced apart from each other. The multiple longitudinal reinforcing beams abut between the bottom plate and the top plate, and two adjacent longitudinal reinforcing beams arranged in the length direction are configured to abut against the battery module to limit a position of the battery module in the installation space. As such, not only can the multiple longitudinal reinforcing beams that are spaced apart from each other support the entire apparatus, but also two adjacent rows of longitudinal reinforcing beams can serve as limiting beams for the battery module to further limit the position of the battery module in the box body, which prevents the battery module from moving or shaking randomly and thus improves the safety of the energy-storage apparatus during transportation and vibration.

As an optional embodiment, in an embodiment according to the first aspect of the disclosure, the battery module is implemented as multiple battery modules. The multiple battery modules are arranged in the length direction, so as to ensure that the energy-storage apparatus includes enough battery cells and thus ensure that the energy-storage apparatus can store enough power.

In a second aspect, an energy-storage system is disclosed in the disclosure. The energy-storage system includes the energy-storage apparatus described above in the first aspect.

Compared with the related art, the disclosure has the following beneficial effects. In the energy-storage apparatus and the energy-storage system provided in embodiments of the disclosure, battery clusters are directly formed by directly installing the battery cells on the liquid-cooling structure, so that the integration of modules and battery packs in intermediate processes is omitted, the integration level of the energy-storage apparatus is improved, structural members such as module frames, battery pack housings, battery frames, limiting assemblies, and harness devices are eliminated, and the number of structural members is greatly reduced. For one thing, the utilization rate of the installation space in the energy-storage apparatus can be improved, and the number of battery cells can be increased, thereby improving the energy density of the energy-storage apparatus, storing more power, and achieving a longer service life. For another thing, it is conducive to reducing the production cost of the energy-storage apparatus and reducing assembly processes, which facilitates acceleration of the production speed of the energy-storage apparatus.

In addition, since the multiple battery cells are directly arranged on the liquid-cooling structure, the liquid-cooling structure can achieve two purposes. That is, first, the module frames, battery frames, and the like can be eliminated by assembling the multiple battery cells in the box body through the liquid-cooling structure, so that the utilization rate of the installation space in the energy-storage apparatus can be improved, the number of battery cells can be increased, and thus the energy density of the energy-storage apparatus can be improved. Second, heat generated from the battery cells can be carried away through surfaces where the liquid-cooling structure is in contact with the battery cells, so that the temperature of the battery cells can be reduced, the continuous operation of the battery cells in a high-temperature environment can be avoided, and the use safety of the energy-storage apparatus can be improved.

### BRIEF DESCRIPTION OF THE DRAWINGS

In order to describe technical solutions in embodiments of the disclosure more clearly, the following will give a brief introduction to accompanying drawings required for the embodiments. Apparently, the accompanying drawings hereinafter described merely illustrate some embodiments of the disclosure. Based on the accompanying drawings, those of ordinary skill in the art can also obtain other drawings without creative effort.
FIG. 1 is a schematic structural view of an energy-storage apparatus disclosed in an embodiment of the disclosure.
FIG. 2 is an exploded schematic structural view of an energy-storage apparatus disclosed in an embodiment of the disclosure.
FIG. 3 is a schematic structural view illustrating arrangement of multiple battery modules in a length direction disclosed in an embodiment of the disclosure.
FIG. 4 is a schematic structural view of a battery module disclosed in an embodiment of the disclosure.
FIG. 5 is an exploded schematic structural view of a battery module disclosed in an embodiment of the disclosure.
FIG. 6 is a schematic structural view of a liquid-cooling structure disclosed in an embodiment of the disclosure.
FIG. 7 is an exploded schematic structural view of a box body disclosed in a first embodiment of the disclosure.
FIG. 8 is a partial enlarged view at circle M in FIG. 7.
FIG. 9 is a schematic structural view of a first liquid-cooling plate, a bottom cross beam, a bottom plate, and a longitudinal reinforcing beam disclosed in an embodiment of the disclosure.
FIG. 10 is a partial enlarged view at circle N in FIG. 9.
FIG. 11 is an exploded schematic structural view of a box body disclosed in an embodiment of the disclosure, viewed from another direction.
FIG. 12 is a partial enlarged view at circle O in FIG. 11.
FIG. 13 is an exploded schematic structural view of a box body disclosed in an embodiment of the disclosure, viewed from still another direction.

Description of main reference signs:
100-energy-storage apparatus;
1-box body; 1a-installation space; 1b-connecting hole; 11-frame; 111-longitudinal beam; 112-cross beam; 112a-bottom cross beam; 112b-top cross beam; 113-bottom reinforcing beam; 1131-reinforcing sub-beam; 114-connecting beam; 1141-hollow portion; 115-longitudinal reinforcing beam; 116-top reinforcing beam; 12-cover plate; 121-bottom plate; 1211-first plate body; 1211a-first sub-plate body; 1212-second plate body; 1212a-second sub-plate body; 1213-bottom plate body; 1212b-connecting plate; 122-top plate; 1221-third plate body; 1222-fourth plate body; 1222a-top plate body; 1223-separating strip; 13-support plate;
2-battery module; 21-liquid-cooling structure; 211-first liquid-cooling plate; 2111-first part; 2112-second part; 2113-through-hole; 212-second liquid-cooling plate; 2121-first side surface; 2122-second side surface; 22-battery cell; 221-first sub-cell; 222-second sub-cell;
f1-length direction; f2-width direction; f3-height direction;
A-first gap; B-second gap; C-third gap.

### DETAILED DESCRIPTION

In order for clarity in elaboration of objectives, technical solutions, and advantages of the disclosure, the disclosure will be described in further detail below with reference to the accompanying drawings and embodiments. It may be understood that the specific embodiments described herein are only used to explain the disclosure, rather than limit the disclosure.

Unless otherwise defmed, all technical and scientific terms used herein have the same meaning as commonly understood by those skilled in the art of the disclosure. The terms used herein in the specification of the disclosure are for the purpose of describing the specific embodiments only and are not intended to limit the disclosure.

It may be understood that, the terms such as "first" and "second" used in the disclosure may be used herein to describe various elements, and these elements are not limited by these terms. These terms are only used to distinguish a first element from another element. For example, without departing from the scope of the disclosure, a first liquid-cooling plate may be referred to as a second liquid-cooling plate, and similarly, the second liquid-cooling plate may be referred to as the first liquid-cooling plate. The first liquid-cooling plate and the second liquid-cooling plate are both liquid-cooling plates, but do not refer to the same liquid-cooling plate.

It may be understood that in the following embodiments, the term "connection" may be understood as "electrical connection" or "communication connection", etc., if there are transmission of electrical signals or data between the connected circuits, modules, or units, etc.

When used herein, singular forms of "a", "an", and "the" may include plural forms, unless the context clearly indicates otherwise. It may be further understood that the terms "include/contain" or "have" represent the existence of the stated features, whole, step, operation, assembly, part, or combinations thereof, but do not exclude the possibility of the existence or addition of one or more other features, whole, step, operation, assembly, part, or combinations thereof. In addition, the term "and/or" used in the specification includes any and all combinations of the listed items.

As mentioned in the background, an energy-storage prefabricated cabin in the related art is formed as follows. Multiple battery cells are first assembled on module frames to form battery modules which are then installed in housings to form battery packs, and next, the multiple battery packs are assembled on battery frames to form battery clusters which are finally installed in a cabin. In intermediate processes, a large number of structural members are required. For example, structural members such as limiting assemblies and harness devices are used for fixing between the battery packs and between the battery clusters. These structural members are complex and occupy a large part of an installation space in the cabin, the battery frames also occupy a large part of the installation space in the cabin, and the module frames occupy a large part of an installation space in the housing. As such, the utilization rate of the installation space in the cabin and the utilization rate of the installation space in the housing are reduced, so that the number of battery cells is reduced, the energy density of the energy-storage prefabricated cabin is affected, and the power storage capacity is small.

Therefore, it is necessary to provide an energy-storage apparatus and an energy-storage system which can improve the utilization rate of the installation space to improve the energy density and store more power.

The technical solutions of the disclosure will be described in further detail below with reference to the accompanying drawings.

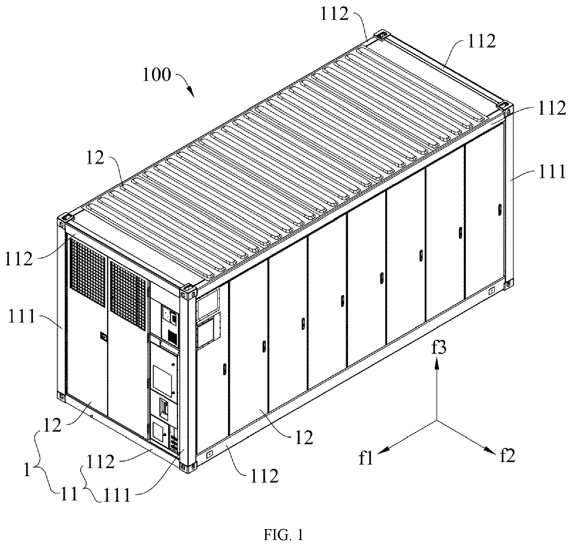

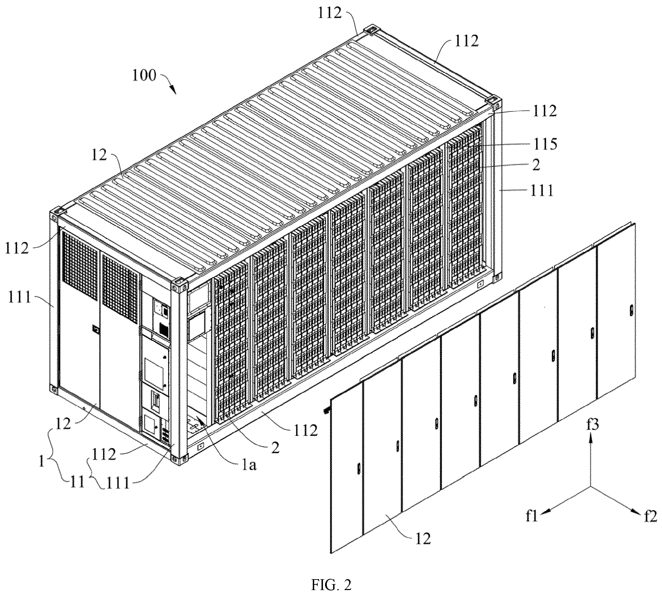

As illustrated in FIG. 1 and FIG. 2, an energy-storage apparatus is disclosed in an embodiment according to the first aspect of the disclosure. The energy-storage apparatus 100 can be used as a traditional standard 20-foot energy-storage prefabricated cabin, a non-standard prefabricated cabin, or an outdoor cabinet. The energy-storage apparatus 100 includes a box body 1 and a battery module 2. The box body 1 defines an installation space 1a, and the battery module 2 is disposed in the installation space 1a. The battery module 2 is configured for charging and discharging, to store power and supply power to other devices. The box body 1 is configured to fix and protect the battery module 2 and other electronic components or structures disposed inside the box body 1, and is configured to seal the battery module 2 and other electronic components or structures disposed inside the box body 1, so that external impurities such as moisture and dust are prevented from eroding the electronic components or structures disposed inside the box body 1.

To facilitate stacking and transportation, the energy-storage apparatus 100 in the disclosure is generally a prismatic energy-storage apparatus, for example, a square energy-storage apparatus or a rectangular energy-storage apparatus. In this case, the box body 1 is generally in a square or rectangular shape.

Exemplarily, the box body 1 is in a rectangular shape and has a length direction f1, a width direction f2, and a height direction f3. Optionally, as illustrated in FIG. 1 and FIG. 2, the length direction f1 may be an x-axis direction in a three-dimensional coordinate system, the width direction f2 may be a y-axis direction in a three-dimensional planar coordinate system, and the height direction f3 may be a z-axis direction in the three-dimensional coordinate system.

As illustrated in FIG. 2 to FIG. 5, the battery module 2 provided in embodiments of the disclosure may include a liquid-cooling structure 21 and multiple battery cells 22 positioned in the installation space 1a. The liquid-cooling structure 21 is connected to the box body 1 and has a first side surface 2121 and a second side surface 2122 that are positioned facing towards each other in the length direction f1. At least one of the multiple battery cells 22 is disposed on the first side surface 2121, and at least another of the multiple battery cells 22 is disposed on the second side surface 2122. With such a design, the multiple battery cells 22 are directly arranged on the liquid-cooling structure 21, and thus the liquid-cooling structure 21 can achieve two purposes. That is, first, the module frames, battery frames, and the like can be eliminated by assembling the multiple battery cells 22 in the box body 1 through the liquid-cooling structure 21, so that the utilization rate of the installation space in the energy-storage apparatus 100 can be improved, the number of battery cells 22 can be increased, and thus the energy density of the energy-storage apparatus 100 can be improved. Second, heat generated from the battery cells 22 can be carried away through surfaces where the liquid-cooling structure 21 is in contact with the battery cells 22, so that the temperature of the battery cells 22 can be reduced, the continuous operation of the battery cells 22 in a high-temperature environment can be avoided, and the use safety of the energy-storage apparatus 100 can be improved.

In the energy-storage apparatus 100 provided in embodiments of the disclosure, the multiple battery cells 22 are directly installed on the liquid-cooling structure 21 in the energy-storage apparatus 100, so that the battery frames are eliminated. Therefore, the energy-storage apparatus 100 is also referred to as a battery-frame-free energy-storage apparatus 100. Since battery clusters are directly formed by directly installing the multiple battery cells 22 on the liquid-cooling structure 21, the integration of modules and battery packs in intermediate processes is omitted, the integration level of the energy-storage apparatus 100 is improved, structural members such as module frames, battery pack housings, battery frames, limiting assemblies, and harness devices are eliminated, and the number of structural members is greatly reduced. For one thing, since the module frames and battery frames are not required, the battery cells 22 can be arranged more closely in the box body 1 of the energy-storage apparatus 100, so that the utilization rate of the installation space in the energy-storage apparatus 100 can be further improved, and the number of battery cells 22 can be increased, thereby improving the energy density of the energy-storage apparatus 100 and storing more power. For example, in the disclosure, a single energy-storage apparatus 100 can have an energy density ranging from 470 kwh/m² to 590 kwh/m² while satisfying dimensional requirements for overland transportation and marine transportation, and thus have a longer service life. For another thing, it is conducive to reducing the production cost of the energy-storage apparatus 100 and reducing assembly processes, which facilitates acceleration of the production speed of the energy-storage apparatus 100.

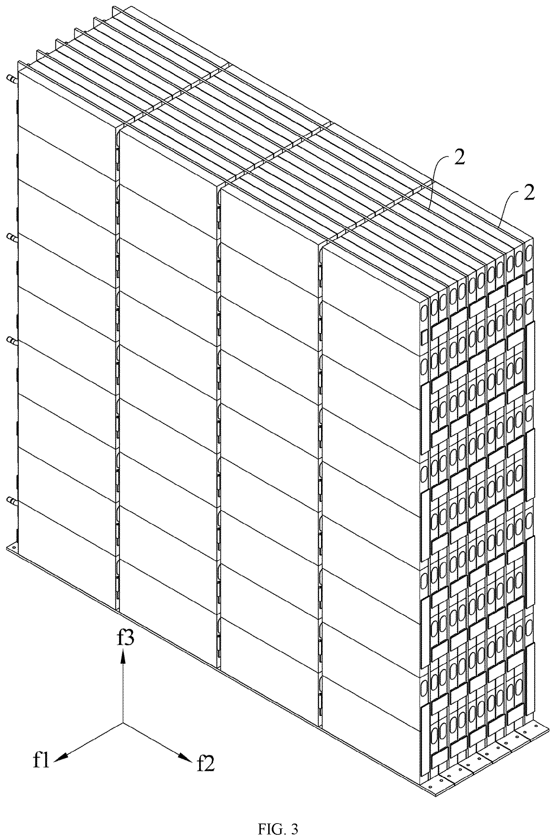

Optionally, as illustrated in FIG. 2 and FIG. 3, the battery module 2 is implemented as multiple battery modules, and the multiple battery modules 2 are arranged in the length direction f1, so as to ensure that the energy-storage apparatus 100 includes enough battery cells 22 and thus ensure that the energy-storage apparatus 100 can store enough power.

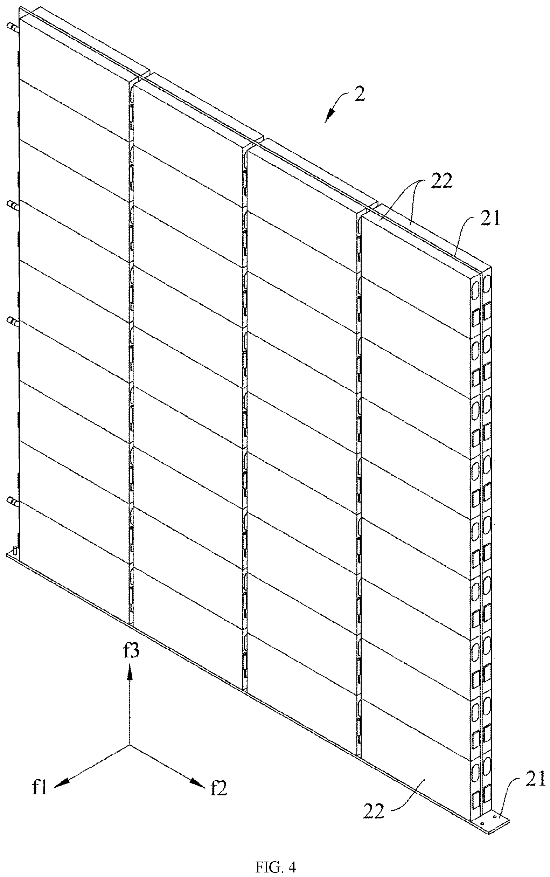

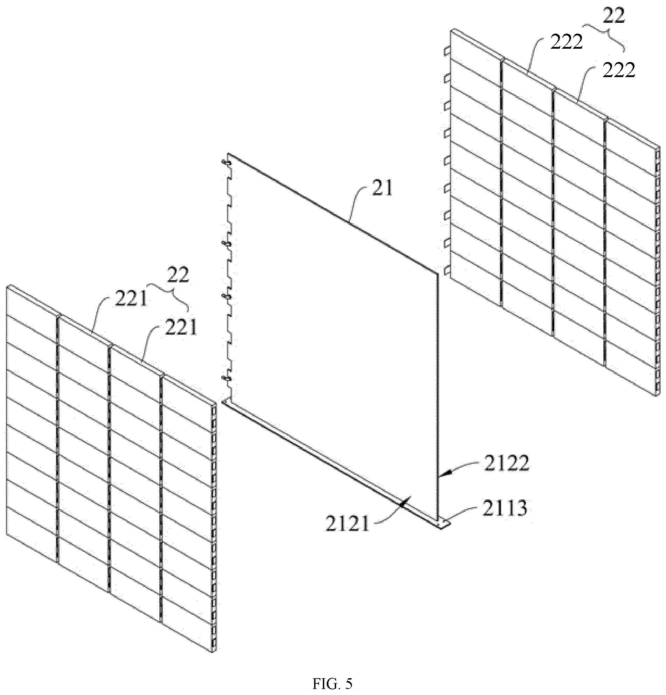

In some optional embodiments, as illustrated in FIG. 4 and FIG. 5, for each of the battery modules 2, the at least one of the multiple battery cells 22 disposed on the first side surface 2121 may include multiple first sub-cells 221, and the multiple first sub-cells 221 are stacked in a matrix in the height direction f3 and the width direction f2; and the at least another of the multiple battery cells 22 disposed on the second side surface 2122 includes multiple second sub-cells 222, and the multiple second sub-cells 222 are stacked in a matrix in the height direction f3 and the width direction f2. With the above design, the energy-storage apparatus 100 can include more battery cells 22, thereby ensuring that the energy-storage apparatus 100 can store more power. In addition, since no bearing plate exists between two of the battery cells 22 adjacent in the height direction f3, the multiple battery cells 22 are stacked in the height direction f3 to ensure that the energy-storage apparatus 100 achieves a real battery-frame-free design while including more battery cells 22. As such, the utilization rate of the installation space in the energy-storage apparatus 100 can be further improved, and the number of battery cells 22 can be further increased, thereby improving the energy density of the energy-storage apparatus 100, storing more power, and achieving a longer service life.

In addition, it may be understood that if the multiple battery modules 2 are arranged in the width direction f2, the first sub-cells 221 and the second sub-cells 222 each are arranged in a matrix in the height direction f3 and the length direction f1. Since a length of the box body 1 in the length direction f1 is generally greater than a width of the box body 1 in the width direction f2, a length of the liquid-cooling structure 21 in the length direction f1 is generally greater than a width of the liquid-cooling structure 21 in the width direction f2, in other words, a length of the liquid-cooling structure 21 if the multiple battery modules 2 are arranged in the length direction f1 is generally greater than a length of the liquid-cooling structure 21 if the multiple battery modules 2 are arranged in the width direction f2. Therefore, when the energy-storage apparatus 100 includes the same number of battery cells 22, compared with the arrangement of the multiple battery modules 2 in the width direction f2, with the arrangement of the multiple battery modules 2 in the length direction f1, the number of battery cells 22 disposed on each liquid-cooling structure 21 can be relatively small. As such, the weight-bearing requirements for the liquid-cooling structure 21 can be reduced, and the stability of the battery cells 22 in the box body 1 can be ensured.

In the disclosure, a liquid-cooling flow channel may be defined in the liquid-cooling structure 21, and the liquid-cooling structure 21 further defines a liquid inlet and a liquid outlet which are in communication with the liquid-cooling flow channel. Therefore, a cooling liquid can flow into the liquid-cooling flow channel through the liquid inlet and can flow out of the liquid-cooling flow channel through the liquid outlet, so that the cooling liquid in the liquid-cooling flow channel can flow continuously. In this process, the cooling liquid in the liquid-cooling flow channel can carry away heat generated from the battery cells 22 through surfaces where the liquid-cooling structure 21 is in contact with the battery cells 22. Therefore, the temperature of the battery cells 22 can be reduced, the continuous operation of the battery cells 22 in a high-temperature environment can be avoided, and the use safety of the energy-storage apparatus 100 can be improved.

In some optional embodiments, the first sub-cells 221 may be connected to the first side surface 2121 through heat-conducting adhesive (not illustrated), and the second sub-cells 222 may be connected to the second side surface 2122 through the heat-conducting adhesive (not illustrated). Since a cooling plate is placed between the first sub-cells 221 and the second sub-cells 222, and two side surfaces (i.e., the first side surface 2121 and the second side surface 2122) of the liquid-cooling structure 21 are respectively adhered to the first sub-cells 221 and second sub-cells 222 modules through the heat-conducting adhesive, the first sub-cells 221 and the second sub-cells 222 can be tightly installed against the liquid-cooling structure 21, which increases the heat-dissipation area and thus improves the heat-dissipation effect. In addition to improving the heat-dissipation effect by virtue of the good heat conductivity of the heat-conducting adhesive, the first sub-cells 221 and the second sub-cells 222 each can be adhered and connected to the liquid-cooling structure 21 by virtue of the good adhesive performance of the heat-conducting adhesive. As such, the overall rigidity of the battery module 2 is improved, and thus the safety of the energy-storage apparatus 100 during transportation and vibration is improved. Furthermore, there is no need to additionally arrange a limiting member or fastening member to fix the battery cells 22 to the liquid-cooling structure 21, so that the utilization rate of the installation space in the energy-storage apparatus 100 can be further improved, the number of battery cells 22 can be further increased, and thus the energy density of the energy-storage apparatus 100 can be further improved.

In other words, with the arrangement of the heat-conducting adhesive on the side surfaces of the liquid-cooling structure 21, the battery cells 22 can be adhered through the heat-conducting adhesive, so that the battery cells 22 are fixed relative to the liquid-cooling structure 21, thereby fixing cells. There is no need to additionally arrange a limiting member or fastening member to fix the battery cells 22 to the liquid-cooling structure 21, so that the utilization rate of the installation space in the energy-storage apparatus 100 can be further improved, the number of battery cells 22 can be further increased, and the energy density of the energy-storage apparatus 100 can be further improved. In addition, through the heat-conducting adhesive, air gaps between the liquid-cooling structure 21 and the battery cells 22 can be reduced to provide good heat conductivity, so that the cooling liquid in the liquid-cooling structure 21 can better carry away heat of the battery cells 22, thereby enhancing the heat-dissipation of the battery cells 22 and achieving better heat-dissipation effect.

In some embodiments, as illustrated in FIG. 2 to FIG. 6, the liquid-cooling structure 21 includes a first liquid-cooling plate 211 and a second liquid-cooling plate 212. The first liquid-cooling plate 211 is connected to the box body 1 and positioned at a bottom of the installation space 1a, that is, the first liquid-cooling plate 211 is connected to an inner bottom surface of the box body 1. The second liquid-cooling plate 212 and the first liquid-cooling plate 211 are connected at an angle. For example, an angle between the second liquid-cooling plate 212 and the first liquid-cooling plate 211 may be 90°. Certainly, in other embodiments, the angle between the second liquid-cooling plate 212 and the first liquid-cooling plate 211 may also be 89°, 89.5°, 90.5°, or 91°, etc. The second liquid-cooling plate 212 has the first side surface 2121 and the second side surface 2122 above, that is, the battery cells 22 are connected to the side surfaces of the second liquid-cooling plate 212. The first liquid-cooling plate 211 includes a first part 2111 positioned on the first side surface 2121 and a second part 2112 positioned on the second side surface 2122, that is, the second liquid-cooling plate 212 is divided into the first part 2111 and the second part 2112 by using the first liquid-cooling plate 211 as a dividing line. The at least one of the multiple battery cells 22 disposed on the first side surface 2121 is supported on the first part 2111, and the at least another of the multiple battery cells 22 disposed on the second side surface 2122 is supported on the second part 2112, that is, at least one of the first sub-cells 221 is supported on the first part 2111, and at least one of the second sub-cells 222 is supported on the second part 2112.

The liquid-cooling structure 21 is designed to include the first liquid-cooling plate 211 and the second liquid-cooling plate 212 which are disposed at an angle, so that the battery cells 22 are fixed on the side surfaces of the first liquid-cooling plate 211, and the battery cells 22 are supported on the second liquid-cooling plate 212. For one thing, the battery cells 22 can be cooled by the first liquid-cooling plate 211 and the second liquid-cooling plate 212. For another thing, the battery cells 22 can be supported by the second liquid-cooling plate 212. As such, the battery cells 22 will not be suspended to improve the stability of the battery cells 22 on the liquid-cooling structure 21, which is conducive to improving the safety of the battery cells 22 during transportation and vibration. In addition, the battery cells 22 will not be in direct contact with the box body 1, so that the reverse conduction of the temperature outside the box body 1 to the battery cells 22 through the box body 1 can be reduced or avoided, and thus the liquid-cooling effect is improved.

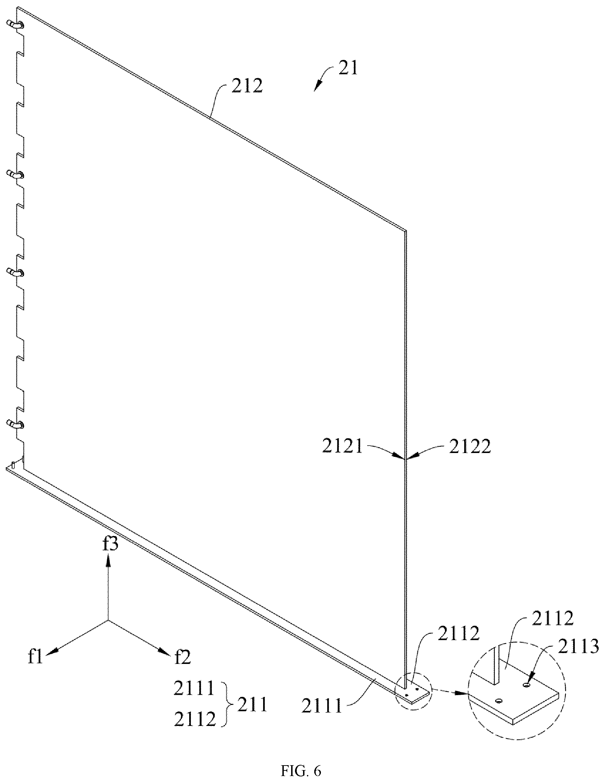

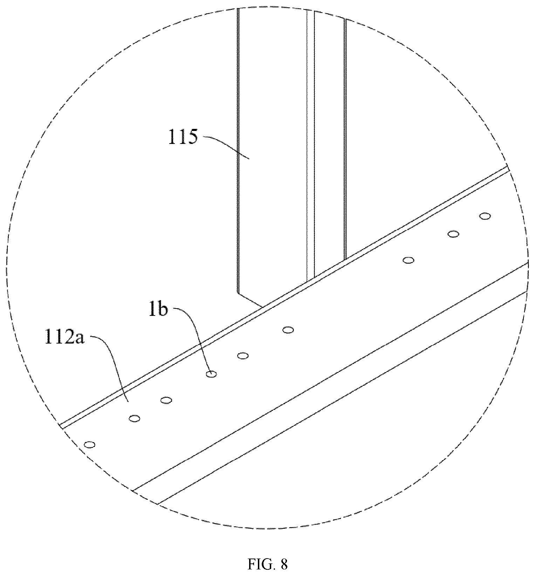

In some embodiments, as illustrated in FIG. 6, FIG. 7, and FIG. 8, the box body 1 defines a connecting hole 1b at an inner bottom surface of the box body 1. The first liquid-cooling plate 211 defines a through-hole 2113. The through-hole 2113 is configured for a fastening member to pass through to make the fastening member threadedly connected to the connecting hole 1b, so that the first liquid-cooling plate 211 can be fixedly installed on the box body 1, and the liquid-cooling structure 21 and the battery cells 22 can be fixedly installed in the box body 1. The fastening member may be a bolt or a screw, etc. The battery module 2 is fixedly installed through the fastening member such as the bolt or the screw, which has a simple installation method and facilitates assembling of the energy-storage apparatus 100. In addition, compared with the snap-fit connection, the threaded connection can make the connection between the first liquid-cooling plate 211 and the box body 1 more reliable and stable, which is conducive to improving the installation stability of the battery module 2 in the box body 1 and thus improving the safety of the energy-storage apparatus 100 during transportation and vibration.

Optionally, the through-hole 2113 is implemented as multiple through-holes. The multiple through-holes 2113 are spaced apart from each other in the length direction f1, part of the through-holes 2113 may be positioned in the first part 2111, and another part of the through-holes 2113 may be positioned in the second part 2112. Exemplarily, as illustrated in FIG. 6, the through-hole 2113 is implemented as two through-holes, where one of the through-holes 2113 is positioned in the first part 2111, and the other of the through-holes 2113 is positioned in the second part 2112. Correspondingly, the connecting hole 1b is implemented as multiple connecting holes, and one connecting hole 1b corresponds to one through-hole 2113. The fastening member is also implemented as multiple fastening members, and one fastening member passes through the one through-hole 2113 and is connected to the one connecting hole 1b, so that the first liquid-cooling plate 211 is connected to the box body 1. Through the multiple fastening members, the connection between the first liquid-cooling plate 211 and the box body 1 is achieved, so that the connection stability between the first liquid-cooling plate 211 and the box body 1 can be further improved.

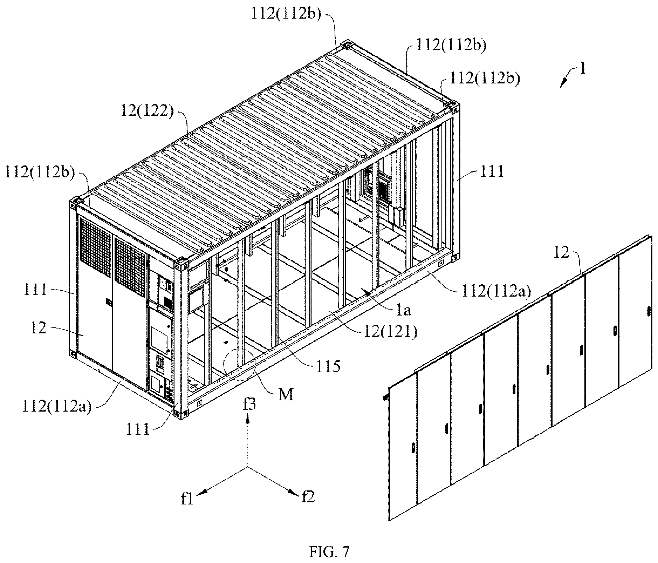

In some optional embodiments, the box body 1 may include a main box body and a bottom plate which are connected to each other, the bottom plate is configured to cover a bottom opening of the main box body, and the installation space 1a above is defined between the bottom plate and the main box body to accommodate the battery module 2. In some other optional embodiments, the box body 1 may include a main box body and a top plate, the top plate is configured to cover a top opening of the main box body positioned in the height direction f3 of the box body 1, and the installation space 1a above is defined between the top plate and the main box body to accommodate the battery module 2. In some other optional embodiments, as illustrated in FIG. 7, the box body 1 may include a frame 11 and multiple cover plates 12. The frame 11 includes multiple longitudinal beams 111 and multiple cross beams 112. The multiple longitudinal beams 111 are spaced apart from each other in a circumferential direction of the box body 1. Two cross beams 112 that are spaced apart from each other are connected between any two adjacent longitudinal beams 111. Each of the cover plates 12 is connected between two adjacent longitudinal beams 111 and is connected between two adjacent cross beams 112 to cooperatively define the installation space 1a above to accommodate the battery module 2.

Preferably, the box body 1 in the disclosure uses a structure of the frame 11 and the multiple cover plates 12. Compared with the box body 1 with a structure of the main box body and the bottom plate or with a structure of the main box body and the top plate, since the box body 1 in the disclosure is generally large, the main box body is also generally large, which makes it difficult to process an integrated main box body and results in a large processing difficulty of the box body 1. In this case, the multiple longitudinal beams 111, the multiple cross beams 112, and the multiple cover plates 12 are spliced into the box body 1. Since the longitudinal beams 111, cross beams 112, and cover plates 12 are processed more easily than the integrated main box body, the box body 1 in the disclosure uses a structure of the frame 11 and the multiple cover plates 12, which can reduce the processing difficulty of the box body 1 and facilitate processing of the box body 1.

For example, when the box body 1 in the disclosure uses the structure of the frame 11 and the multiple cover plates 12, the technical solutions of the disclosure will be described in further detail below.

In the disclosure, for ease of description and understanding, as illustrated in FIG. 7, a cross beam 112 positioned at a bottom of the box body 1 in the height direction f3 of the box body 1 is defined as a bottom cross beam 112a. A cross beam 112 positioned at a top of the box body 1 in the height direction f3 of the box body 1 is defined as a top cross beam 112b. A cover plate 12 positioned at the bottom of the box body 1 in the height direction f3 of the box body 1 is defined as a bottom plate 121. A cover plate 12 positioned at the top of the box body 1 in the height direction f3 of the box body 1 is defined as a top plate 122. The bottom plate 121 is connected between two adjacent bottom cross beams 112a, and the top plate 122 is connected between two adjacent top cross beams 112b. The first liquid-cooling plate 211 is connected to a top surface of the bottom cross beam 112a. Specifically, the bottom cross beam 112a defines a connecting hole 1b at the top surface of the bottom cross beam 112a, the first liquid-cooling plate 211 defines a through-hole 2113, and the through-hole 2113 is configured for a fastening member to pass through to make the fastening member threadedly connected to the connecting hole 1b, so that the first liquid-cooling plate 211 can be fixedly installed on the box body 1, and the liquid-cooling structure 21 and the battery cells 22 can be fixedly installed in the box body 1.

It may be understood that, the above definitions are only for ease of description and understanding, and may not be construed as limiting the protection scope of the disclosure.

In some embodiments, as illustrated in FIG. 2 and FIG. 7, the frame 11 further includes multiple longitudinal reinforcing beams 115 that are spaced apart from each other. The multiple longitudinal reinforcing beams 115 abut between the bottom plate 121 and the top plate 122, and two adjacent longitudinal reinforcing beams 115 arranged in the length direction f1 are configured to abut against the battery module 2 to limit a position of the battery module 2 in the installation space 1a. As such, not only can the multiple longitudinal reinforcing beams 115 that are spaced apart from each other support the entire apparatus, but also two adjacent rows of longitudinal reinforcing beams 115 can serve as limiting beams for the battery module 2 to further limit the position of the battery module 2 in the box body 1, which prevents the battery module 2 from moving or shaking randomly and thus improves the safety of the energy-storage apparatus 100 during transportation and vibration.

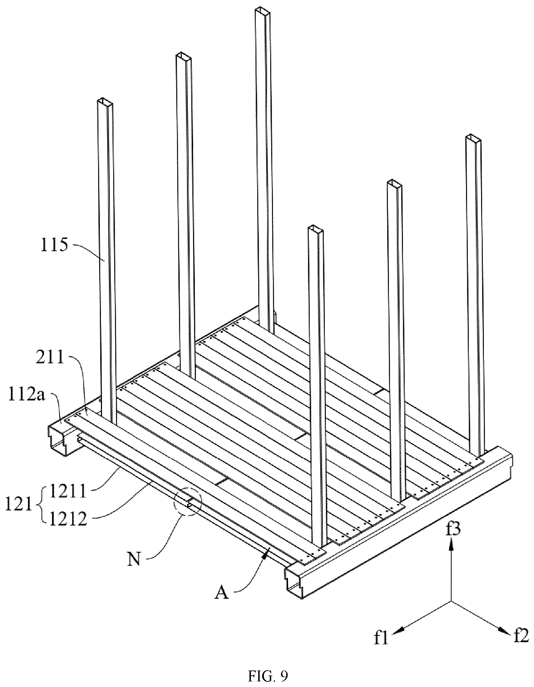

In some optional embodiments, as illustrated in FIG. 9, in the height direction f3, the top surface of the bottom cross beam 112a is higher than a top surface of the bottom plate 121 to define a first gap A between the first liquid-cooling plate 211 and the top surface of the bottom plate 121. As such, the first liquid-cooling plate 211 is in contact with only the bottom cross beam 112a and in no contact with the bottom plate 121, so that the first liquid-cooling plate 211 is in contact with an external environment through only the bottom cross beam 112a, thereby avoiding the contact between the first liquid-cooling plate 211 and the external environment through the bottom plate 121. Therefore, the contact between the liquid-cooling structure 21 and the external environment can be reduced, so that the reverse conduction of the external heat to the liquid-cooling structure 21 or even to the battery cells 22 through the box body 1 can be reduced, and thus the liquid-cooling effect is improved.

In some embodiments, the bottom plate 121 may include a first plate body 1211 and a second plate body 1212. The first plate body 1211 and the second plate body 1212 are spaced apart from each other in the height direction f3, and the first plate body 1211 is closer to the top surface of the bottom cross beam 112a than the second plate body 1212. In the height direction f3, a top surface of the first plate body 1211 is lower than the top surface of the bottom cross beam 112a to define a first gap A between the top surface of the first plate body 1211 and the first liquid-cooling plate 211, and a bottom surface of the second plate body 1212 is higher than a bottom surface of the bottom cross beam 112a. As such, when the energy-storage apparatus 100 in the disclosure is placed on a placement plane such as a bearing surface for holding the energy-storage apparatus 100 or a transportation device, the bottom cross beam 112a is in contact with the placement plane, while the second plate body 1212 may not be in contact with the placement plane. In addition, since the second plate body 1212 is spaced apart from the first plate body 1211, and the first plate body 1211 is spaced apart from the first liquid-cooling plate 211, the effect of multiple avoidance of contact between the first liquid-cooling plate 211 and the external environment through the bottom plate 121 can be achieved. In this way, the contact between the liquid-cooling structure 21 and the external environment can be greatly reduced, so that the reverse conduction of the external heat to the liquid-cooling structure 21 or even to the battery cells 22 through the box body 1 can be further reduced, and thus the liquid-cooling effect is further improved.

In some embodiments, the first plate body 1211 includes two separate first sub-plate bodies 1211a. The two first sub-plate bodies 1211a are spaced apart from each other in the width direction f2 of the box body 1 to define a second gap B, and in this case, the second gap B is in communication with the first gap A. The second plate body 1212 includes two separate second sub-plate bodies 1212a. The two second sub-plate bodies 1212a are arranged in the width direction f2 of the box body 1 and are respectively extended with connecting plates 1212b in the height direction f3. Two connecting plates 1212b are connected to each other, and each of the two connecting plates 1212b is spaced apart from one of the two first sub-plate bodies 1211a to define a third gap C, and in this case, the third gap C is in communication with both the first gap A and gaps between the first sub-plate bodies 1211a and the second sub-plate bodies 1212a.

With the above design, the first gap A is in communication with the gaps between the second sub-plate 1212a and the first sub-plate bodies 1211a through the second gap B and the third gap C. In this case, a hot air flow on a surface of the first liquid-cooling plate 211 positioned in the first gap A may be conducted sequentially through the second gap B and the third gap C to the gaps between the first sub-plate bodies 1211a and the second sub-plate bodies 1212a to avoid being trapped in the first gap A, which is conducive to improving the liquid-cooling effect of the first liquid-cooling plate 211. In addition, with the arrangement of the connecting plate 1212b, the connection stability between the two second sub-plate bodies 1212a can be improved.

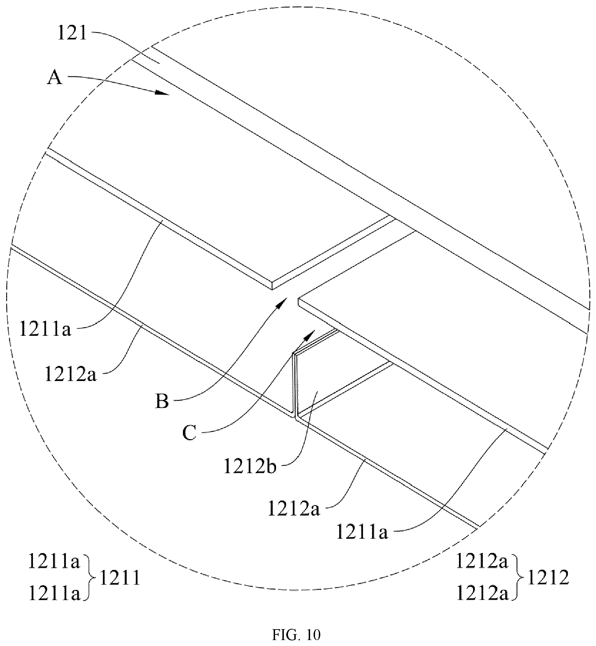

In some embodiments, as illustrated in FIG. 9 to FIG. 11, the bottom plate 121 includes multiple bottom plate bodies 1213. The multiple bottom plate bodies 1213 are spaced apart from each other in the length direction f1. The frame 11 further includes a bottom reinforcing beam 113. The bottom reinforcing beam 113 is connected between two adjacent bottom plate bodies 1213 and is connected between the two adjacent bottom cross beams 112a. Each of the bottom plate bodies 1213 may include the first plate body 1211 and the second plate body 1212 above.

In the disclosure, with the arrangement of the bottom reinforcing beam 113, the structural strength of the frame 11 can be reinforced, the battery module 2 can be better protected, and the safety of the energy-storage apparatus 100 during transportation and vibration can be improved. In addition, since the bottom plate 121 in the disclosure includes the multiple bottom plate bodies 1213, and the bottom reinforcing beam 113 is connected between the two adjacent bottom plate bodies 1213, the bottom plate bodies 1213 are processed more easily than an entire plate with a relatively large area, and the bottom reinforcing beam 113 connected between the two adjacent bottom plate bodies 1213 can be in contact with the placement plane. In this way, compared with a method in which the bottom reinforcing beam 113 is supported on a top surface of the bottom plate 121, the entire gravitational force of the bottom reinforcing beam 113 will not be all applied to the bottom plate 121, and instead, a supporting function can be achieved to a certain extent, which is conducive to improving the overall rigidity of the box body 1 and thus improving the safety of the energy-storage apparatus 100 during transportation and vibration.

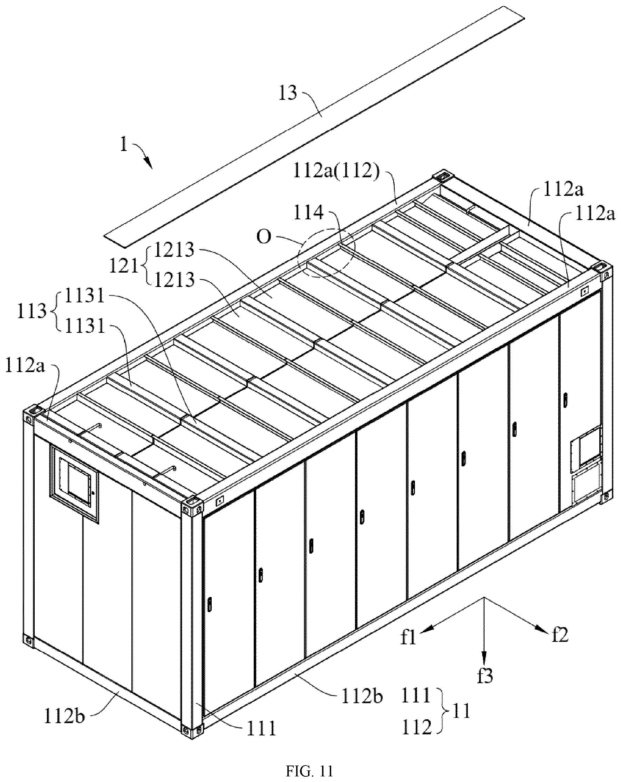

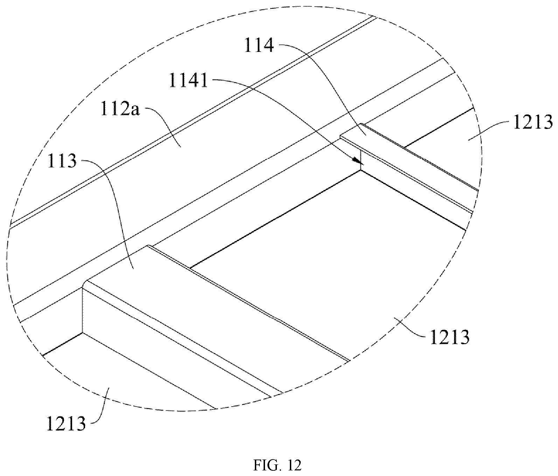

In some embodiments, as illustrated in FIG. 11 and FIG. 12, the bottom reinforcing beam 113 may be implemented as multiple bottom reinforcing beams, the frame 11 further includes multiple connecting beams 114, and the multiple connecting beams 114 and the multiple bottom reinforcing beams 113 are arranged alternately in sequence in the length direction f1. In view of the battery module in the disclosure, with the arrangement of the multiple bottom reinforcing beams 113 and the multiple connecting beams 114, the overall transverse rigid structural strength of the frame can be ensured, so that the bottom plate 121 can better withstand the gravitational force from the battery module with more battery cells, thereby improving the safety of the energy-storage apparatus 100 during transportation and vibration.

Exemplarily, the connecting beam 114 may be of a beam structure defining a hollow portion 1141, and the hollow portion 1141 extends through the connecting beam 114 at a side surface of the connecting beam 114 positioned in the length direction f1. In the length direction f1, a width of the connecting beam 114 is smaller than a width of the bottom reinforcing beam 113.

In some embodiments, the bottom reinforcing beam 113 includes two separate reinforcing sub-beams 1131. The two reinforcing sub-beams 1131 are spaced apart from each other in a width direction f2 of the box body 1. The box body 1 further includes a support plate 13. The support plate 13 is respectively connected to bottom surfaces of the two reinforcing sub-beams 1131, and a bottom surface of the support plate 13 is flush with a bottom surface of the bottom cross beam 112a. Since a length of a regular and ordinary reinforcing beam in the width direction of the box body is generally relatively small, for example, smaller than 2 meters, the two reinforcing sub-beams 1131 are used and spliced into the bottom reinforcing beam 113 through the support plate 13 to satisfy requirements for the length of the bottom reinforcing beam 113, without a need for customizing a relatively long bottom reinforcing beam 113. As such, the processing of the bottom reinforcing beam 113 is facilitated, and the cost of the bottom reinforcing beam 113 is reduced. In addition, since the support plate 13 is respectively connected to the bottom surfaces of the two reinforcing sub-beams 1131, and the bottom surface of the support plate 13 is flush with the bottom surface of the bottom cross beam 112a, the bearing capacity at a joint between the two reinforcing sub-beams 1131 can be increased with the help of the support plate 13, to ensure the overall strength of the bottom reinforcing beam 113. That is, the above design can facilitate the processing while ensuring the overall strength.

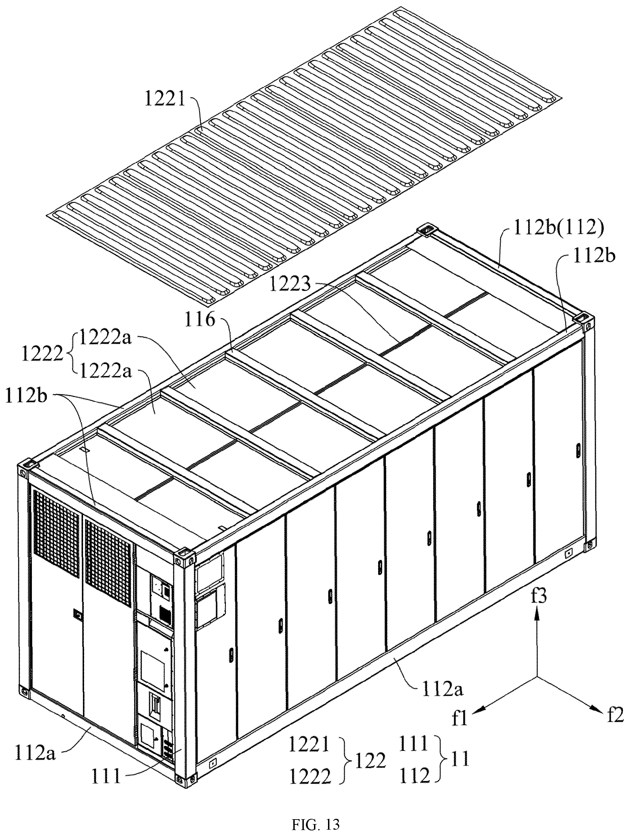

In some embodiments, as illustrated in FIG. 13, the top plate 122 includes a third plate body 1221 and a fourth plate body 1222 which are spaced apart from each other. The third plate body 1221 is positioned above the fourth plate body 1222 in the height direction f3. A separating strip 1223 is disposed on one surface of the fourth plate body 1222 positioned facing towards the third plate body 1221. The separating strip 1223 extends in the length direction f1, and the separating strip 1223 is spaced apart from the third plate body 1221.

Exemplarily, the fourth plate body 1222 includes multiple top plate bodies 1222a, and the multiple top plate bodies 1222a are spaced apart from each other in the length direction f1. The frame 11 further includes a top reinforcing beam 116. The top reinforcing beam 116 is connected between two adjacent top plate bodies 1222a and is connected between two opposite top cross beams 112b, and the top reinforcing beam 116 further abuts against the third plate body 1221. A separating strip 1223 is disposed on one surface of each of the top plate bodies 1222a positioned facing towards the third plate body 1221.

In the disclosure, with the arrangement of the top reinforcing beam 116, the structural strength of the frame 11 can be reinforced, the battery module 2 can be better protected, and the safety of the energy-storage apparatus 100 during transportation and vibration can be improved. In addition, the top reinforcing beam 116 can further support the third plate body 1221, thereby improving the structural strength of the top plate 122. Furthermore, since the top plate 122 in the disclosure includes the multiple top plate bodies 1222a, and the top reinforcing beam 116 is connected between the two adjacent top plate bodies 1222a, the top plate bodies 1222a are processed more easily than an entire plate with a relatively large area.

An energy-storage system is disclosed in an embodiment according to the second aspect of the disclosure. The energy-storage system includes the energy-storage apparatus according to any one of the foregoing embodiments. Specifically, the energy-storage system may further include other cabins, such as an electrical cabin and a fire cabin. It may be understood that, the energy-storage system including the energy-storage apparatus described above can achieve the same or similar beneficial effects as the energy-storage apparatus, and for specific details, reference can be made to descriptions in the embodiments of the energy-storage apparatus, which will not be repeated herein.

The technical features of the above embodiments can be combined arbitrarily. In order to make the descriptions simple, not all possible combinations of the technical features in the above embodiments are described. However, the combination of these technical features is considered to be within the scope of this specification, as long as it has no contradiction.

In addition, the above embodiments merely illustrate several implementation manners of the disclosure, the description thereof is specific and detailed, but the patent scope of the disclosure is not limited to these embodiments. It may be noted that various variants and improvements can be made by those of ordinary skill in the art without departing from the ideas of the disclosure, and these variants and improvements are all encompassed by the protection scope of disclosure. Therefore, the disclosure shall not be understood to be limited to the specification, and the protection scope of the disclosure shall be defined by the claims as attached.

## Claims

1. An energy-storage apparatus, wherein the energy-storage apparatus (100) comprises:
a box body (1) having a length direction (f1) and defining an installation space (1a); and
a battery module (2) comprising a liquid-cooling structure (21) and a plurality of battery cells (22) positioned in the installation space (1a), wherein the liquid-cooling structure (21) is connected to the box body (1) and has a first side surface (2121) and a second side surface (2122) that are positioned facing towards each other in the length direction (f1), at least one of the plurality of battery cells (22) is disposed on the first side surface (2121), and at least another of the plurality of battery cells (22) is disposed on the second side surface (2122).

2. The energy-storage apparatus of claim 1, wherein the box body (1) further has a height direction (f3) and a width direction (f2);
the at least one of the plurality of the battery cells (22) disposed on the first side surface (2121) comprises a plurality of first sub-cells (221), and the plurality of first sub-cells (221) are stacked in a matrix in the height direction (f3) and the width direction (f2); and
the at least another of the plurality of battery cells (22) disposed on the second side surface (2122) comprises a plurality of second sub-cells (222), and the plurality of second sub-cells (222) are stacked in a matrix in the height direction (f3) and the width direction (f2).

3. The energy-storage apparatus of claim 2, wherein the plurality of first sub-cells (221) are connected to the first side surface (2121) through heat-conducting adhesive, and the plurality of second sub-cells (222) are connected to the second side surface (2122) through the heat-conducting adhesive.

4. The energy-storage apparatus of claim 1, wherein the liquid-cooling structure (21) comprises a first liquid-cooling plate (211) and a second liquid-cooling plate (212), the first liquid-cooling plate (211) is connected to the box body (1) and positioned at a bottom of the installation space (1a), the second liquid-cooling plate (212) and the first liquid-cooling plate (211) are connected at an angle, the second liquid-cooling plate (212) has the first side surface (2121) and the second side surface (2122), the first liquid-cooling plate (211) comprises a first part (2111) positioned on the first side surface (2121) and a second part (2112) positioned on the second side surface (2122), the at least one of the plurality of the battery cells (22) disposed on the first side surface (2121) is supported on the first part (2111), and the at least another of the plurality of battery cells (22) disposed on the second side surface (2122) is supported on the second part (2112).

5. The energy-storage apparatus of claim 4, wherein the box body (1) defines a connecting hole (1b) at an inner bottom surface of the box body (1), the first liquid-cooling plate (211) defines a through-hole (2113), and the through-hole (2113) is configured for a fastening member to pass through to make the fastening member threadedly connected to the connecting hole (1b).

6. The energy-storage apparatus of claim 4, wherein the box body (1) comprises a frame (11) and a plurality of cover plates (12), the frame (11) comprises a plurality of longitudinal beams (111) and a plurality of cross beams (112), the plurality of longitudinal beams (111) are spaced apart from each other in a circumferential direction of the box body (1), two cross beams (112) that are spaced apart from each other are connected between any two adjacent longitudinal beams (111), and each of the plurality of cover plates (12) is connected between two adjacent longitudinal beams (111) and is connected between two adjacent cross beams (112) to cooperatively define the installation space (1a); and
a cross beam (112) positioned at a bottom of the box body (1) in a height direction (f3) of the box body (1) is a bottom cross beam (112a), a cover plate (12) connected between two adjacent bottom cross beams (112a) is a bottom plate (121), the first liquid-cooling plate (211) is connected to a top surface of the bottom cross beam (112a), and in the height direction (f3), the top surface of the bottom cross beam (112a) is higher than a top surface of the bottom plate (121) to define a first gap (A) between the first liquid-cooling plate (211) and the top surface of the bottom plate (121).

7. The energy-storage apparatus of claim 6, wherein the bottom plate (121) comprises a first plate body (1211) and a second plate body (1212), the first plate body (1211) and the second plate body (1212) are spaced apart from each other in the height direction (f3), the first plate body (1211) is closer to the top surface of the bottom cross beam (112a) than the second plate body (1212), and in the height direction (f3), a top surface of the first plate body (1211) is lower than the top surface of the bottom cross beam (112a), and a bottom surface of the second plate body (1212) is higher than a bottom surface of the bottom cross beam (112a).

8. The energy-storage apparatus of claim 7, wherein the first plate body (1211) comprises two separate first sub-plate bodies (1211a), and the two first sub-plate bodies (1211a) are spaced apart from each other in a width direction (f2) of the box body (1) to define a second gap (B); and
the second plate body (1212) comprises two separate second sub-plate bodies (1212a), the two second sub-plate bodies (1212a) are arranged in the width direction (f2) of the box body (1) and are respectively extended with connecting plates (1212b) in the height direction (f3), two connecting plates (1212b) are connected to each other, and each of the two connecting plates (1212b) is spaced apart from one of the two first sub-plate bodies (1211a) to define a third gap (C).

9. The energy-storage apparatus of claim 1, wherein the box body (1) comprises a frame (11) and a plurality of cover plates (12), the frame (11) comprises a plurality of longitudinal beams (111) and a plurality of cross beams (112), the plurality of longitudinal beams (111) are spaced apart from each other in a circumferential direction of the box body (1), two cross beams (112) that are spaced apart from each other are connected between any two adjacent longitudinal beams (111), and each of the plurality of cover plates (12) is connected between two adjacent longitudinal beams (111) and is connected between two adjacent cross beams (112) to cooperatively define the installation space (1a).

10. The energy-storage apparatus of claim 9, wherein a cross beam (112) positioned at a bottom of the box body (1) in a height direction (f3) of the box body (1) is a bottom cross beam (112a), and a cover plate (12) connected between two adjacent bottom cross beams (112a) is a bottom plate (121); and
the bottom plate (121) comprises a plurality of bottom plate bodies (1213), the plurality of bottom plate bodies (1213) are spaced apart from each other in the length direction (f1), the frame (11) further comprises a bottom reinforcing beam (113), and the bottom reinforcing beam (113) is connected between two adjacent bottom plate bodies (1213) and is connected between the two adjacent bottom cross beams (112a).

11. The energy-storage apparatus of claim 10, wherein the bottom reinforcing beam (113) comprises two separate reinforcing sub-beams (1131), the two reinforcing sub-beams (1131) are spaced apart from each other in a width direction (f2) of the box body (1), the box body (1) further comprises a support plate (13), the support plate (13) is respectively connected to bottom surfaces of the two reinforcing sub-beams (1131), and a bottom surface of the support plate (13) is flush with a bottom surface of the bottom cross beam (112a).

12. The energy-storage apparatus of claim 9, wherein a cover plate (12) positioned at a bottom of the box body (1) in a height direction (f3) of the box body (1) is a bottom plate (121), a cover plate (12) positioned at a top of the box body (1) in the height direction (f3) of the box body (1) is a top plate (122), the frame (11) further comprises a plurality of longitudinal reinforcing beams (115) that are spaced apart from each other, the plurality of longitudinal reinforcing beams (115) abut between the bottom plate (121) and the top plate (122), and two adjacent longitudinal reinforcing beams (115) arranged in the length direction (f1) are configured to abut against the battery module (2) to limit a position of the battery module (2) in the installation space (1a).

13. The energy-storage apparatus of claim 1, wherein the battery module (2) is implemented as a plurality of battery modules, and the plurality of battery modules (2) are arranged in the length direction (f1).

14. An energy-storage system comprising the energy-storage apparatus of any one of claims 1 to 13.
